# EUROPEAN PATENT APPLICATION

(11) **EP 1 429 570 A1**
(43) Date of publication of application: **16.06.2004**
(21) Application number: 02406096.4
(22) Date of filing: 13.12.2002
(51) Int. Cl.: H04Q 7/36, G07C 9/00

(54) **On-site localisation system and method**

(71) Applicant: ABB RESEARCH LTD., 8050 Zürich (CH)
(72) Inventor: Dzung, Dacfey, 5430 Wettingen (CH); Aakvaag, Niels, 1362 Hosle (NO)
(74) Representative: ABB Patent Attorneys

(57) **Abstract**

The invention is concerned with an on-site localisation system comprising several localisation receivers (40,41) which listen-in to the messages transmitted from nearby mobile phones (10) to the GSM infrastructure and a management system (5) which identifies the origin of said messages. The invention does not assume cooperation by some GSM or GPS cellular mobile communication infrastructure, nor does it require people to carry some extra localisation device such as badges or tags. It simply combines locally installed localisation receivers with the mobile phones already carried by most people, yet without requiring any permanent cooperation by the mobile phone either.

## Description

### FIELD OF THE INVENTION

The invention relates to the localisation techniques for localising people within a given site such as a large office building. It is concerned with an on-site localisation system and method as described in the preamble of claim 1 and claim 3, respectively.

### BACKGROUND OF THE INVENTION

The localisation of people using mobile phones is a crucial technology for the provision of the increasingly important applications such as emergency services, location-based information services, people paging, and access control services. There are several methods known by which the localisation service centre may obtain the position of a mobile phone: (i) a cooperating mobile station determines its position using some independent means such as satellite-based global positioning GPS, and sends the position information to the localisation service centre using cellular data transmission, (ii) the cooperating mobile station assists the localisation service by reporting results of some auxiliary measurements (timing or amplitude measurements from surrounding cellular base stations) from which the localisation service can compute the mobile station position, (iii) several surrounding base stations measure and compare arrival times and/or directions of signals transmitted by the mobile station and again compute the mobile station position. The first method based on present-day GPS does not work within a building whereas the second and third method are intended to localise mobile phone users within the wide coverage area of a GSM or other cellular mobile communication systems, i.e. with accuracies of some 50 to 100 meters only.

Other localisation systems use fixed short range radio frequency (RF) detectors to detect signals emitted from localisation devices, such as electronic tags, badges or pagers, to be carried by the targeted persons. The person is localised when a signal from his tag is detected by a given short range receiver.

In the patent US 6,275,477 B1 a campus area pager system is provided, including a local area network (LAN) having a system backbone interconnecting base stations for wireless communication to several paging units or mobile terminals. They all include RF receivers and transmitters and are carried by a respective user. A paging unit initiates a registration or localisation process by broadcasting a request to any base stations available to receive the broadcast. The latter respond to the paging unit, which in turn selects a canonical base station to register with according to certain criteria such as smallest load. Look-up tables relating to any registered paging unit or mobile terminal its canonical base station are maintained in a pager server.

All the methods above require and assume that either the stationary infrastructure side or the mobile phone/station/terminal, e.g. via the provision of special localisation equipment such as tags or pagers, have implemented the localisation service and actively cooperate during its use.

### DESCRIPTION OF THE INVENTION

It is therefore an object of the invention to create an on-site localisation technique which can be used inside buildings and allows to determine the position of a mobile device without any active participation of the latter. These objects are achieved by an on-site localisation system and a method for localising a target mobile device according to claim 1 and claim 3, respectively. Further preferred embodiments are evident from the dependent patent claims.

According to the invention, a mobile phone carried by a target person is used as a mobile device for locating the person, and any signalling or data messages transmitted by the mobile phone in standby mode or user data transfer mode is used as a localisation signal. Short-range localisation receivers listen-in to the messages transmitted from nearby mobile phones to the GSM base stations external to the site and thus detect a mobile phone in their close proximity. From any message received from a properly registered mobile phone, a management system or central service centre determines its position and identity. Hence, the corresponding localisation system comprises at least
- an on-site localisation service centre LSC as a central server or user ID database,
- a number of localisation receivers LRX as base stations installed at relevant points on the site, and connected via a local area network to the localisation service centre,
- an on-site localisation service registration device LREGD connected via the local area network to the localisation service centre, and
- the mobile phones as carried by their individual users as mobile stations or devices.

The present invention is preferably intended for a localisation and identification of people within some local coverage area of the system, e.g. for a determination in which room or corridor or small area within an office site a particular person is located. In this case, the localisation service registration device LREGD is installed at or near the reception of the office building.

In a preferred embodiment of the method according to the invention, the registration process taking place upon arrival of a visiting person comprises the following steps: emission of a signalling message by the person's mobile device, reception of the message by the localisation service registration device LREGD, decoding a device identifier from the message header, entering the person's identity and linking the latter with the device identifier.

In contrast to known systems, the localisation system of the invention is autonomous in that it does not assume cooperation by some GSM cellular mobile communication infrastructure, nor does it require people to carry some extra localisation device such as badges or tags. It simply combines locally installed eavesdropping localisation receivers with the mobile phones already carried by most people, yet without requiring any permanent cooperation by the mobile phone either.

### BRIEF DESCRIPTION OF THE DRAWING

The subject matter of the invention will be explained in more detail in the following text with reference to preferred exemplary embodiments which are illustrated in the attached drawing, in which:

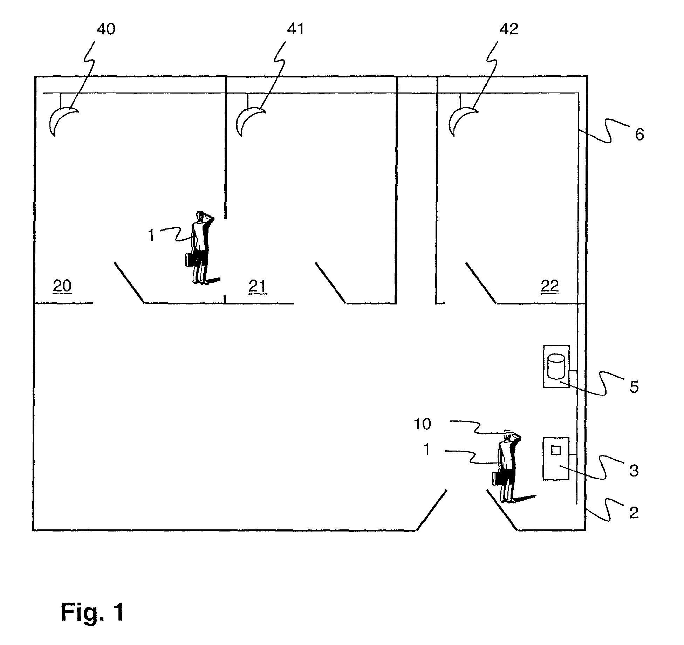

Fig.1 schematically shows a localisation system according to the invention.
The reference symbols used in the drawing, and their meanings, are listed in summary form in the list of reference symbols.

### DETAILED DESCRIPTION OF PREFERRED EMBODIMENTS

Fig.1 illustrates how a target person 1 is registered upon entering a certain site, i.e. an office building, a hotel or even a campus comprising several buildings, and subsequently tracked, i.e. continuously localised within the site. The target person 1 or mobile phone user enters a building 2 comprising several rooms 20,21,22. At the reception desk of the building 2 or at least close to the entrance, the person 1 is requested to trigger a signalling exchange from her mobile phone 10 to the GSM infrastructure, while placing the phone close to the localisation service registration device (LREGD) 3. For example, the receptionist or the automated LREGD 3 itself may ask the user 1 to briefly turn her mobile phone 10 off and on again. It is to be noted that the GSM infrastructure assumed here could of course be replaced by any wide area mobile radio system.

The LREGD 3 picks up the signalling message transmitted by the mobile phone 10 and decodes in particular a device identity in the form of a so-called "source MS identity" in the header part of the message. It may also measure the received power level. The source MS identity determines the person 1 carrying that mobile phone 10 in some GSM system-specific format, and the received power level gives an indication of the transmit power applied by the mobile phone 10 and required in a later step below.

The receptionist of the LREGD 3 or the visiting person herself enters the appropriate identification of the targeted person 1, such as her name, into the LREGD 3, thus confirming or authenticating the mapping of the individual person 1 to the system-specific source MS identity. Alternatively, the person 1 can identify herself by presenting a machine-readable identity card to the LREGD 3.

For security and network routing reasons, mobile communication systems typically do not transmit user calling numbers directly over the air, but introduce temporary routing identities in the message headers to and from the mobile stations. As these temporary identities in general are re-assigned whenever the mobile phone changes the GSM base station, they can be used in place of the "source MS identity" in the on-site, i.e. small-scale localisation system of the present invention. It is to be noted also that messages or their pay-loads may be encrypted and the frequencies or spreading codes may be assigned dynamically in some mobile-specific manner. It depends on the protocol as to which part of the message exchange can be used by the localisation service to identify the mobile phone 10 and therewith its user 1.

The on-site localisation service is now operational for the registered person 1. Any signalling or data message transmitted by the mobile phone 10 in standby mode or user data transfer mode to the GSM infrastructure may also be picked up by some nearby localisation receiver (LRX) 40,41,42. The LRX 40,41 only accepts very strong signals indicating proximity of the mobile phone transmitter 10, with the threshold given by the power level measured in the registration step above and the required radius from the LRX 40,41 within which the position of the mobile phone should be determined, e.g. some 10 meters. The LRX 40,41 either perform the decoding of the message source MS identity locally, or send the raw received messages including received power levels to a localisation service centre (LSC) 5. The latter is connected to all the LRX 40,41 as well as the LREGD 3 via a local area network (LAN) 6 as is commonplace in modem office buildings and for enterprise-wide computer networks or intranets.

For a given message source MS identity, the LSC 5 compares the power levels received by the LRX 40,41, and also maps the source MS identity to the name of the targeted person 1. The LRX 40 with the strongest received signal gives the position of the identified person 1, i.e. the cell or room 20 associated with that particular LRX 40.

Since the LRX are passive, the localisation of a particular person will normally only be updated when her mobile phone transmits some signalling, i.e. silent exchange with the GSM base station, or user data, i.e. speech, messages carrying the source MS identity. A mobile phone can however be forced to transmit by initiating an acknowledged dummy data or voice call to that person. This would be initiated by the localisation service centre LSC whenever an application requires an updated localisation.

### LIST OF DESIGNATIONS

- 1: target person
- 10: mobile phone
- 2: site, building
- 20,21: localisation cells, rooms
- 3: localisation service registration device (LREGD)
- 40,41: localisation receiver (LRX)
- 5: localisation service centre (LSC)
- 6: local area network (LAN)

## Claims

1. An on-site localisation system for localising a target mobile device (10) within a site (2) consisting of several localisation cells (20,21), comprising a localisation service centre (5) capable of identifying localisation signals and, in each localisation cell (20,21), a localisation receiver (40,41) capable of receiving a localisation signal from a mobile device (10) residing within the corresponding localisation cell, wherein the localisation service centre (5) and the localisation receivers (40,41) are interconnected by a local area network (6),
**characterised in that** a localisation service registration device (3) is connected to the local area network (6) and capable of performing a registration of the target mobile device (10), and **in that** the mobile device (10) is a mobile phone and the localisation signal is a signalling or data message transmitted by the mobile phone.

2. The on-site localisation system according to claim 1, **characterized in that** the site (2) is a building and the localisation cells (20,21) are rooms.

3. A method of localising a target mobile device (10) within a site (2) consisting of several localisation cells (20,21), comprising the steps of receiving a localisation signal from a target mobile device (10) by a localisation receiver (40) associated to a localisation cell (20), and identifying the localisation signal from the target mobile device (10) at a localisation service centre (5) interconnected by a local area network (6) with the localisation receiver (40),
**characterised in that** a localisation service registration device (3) is connected to the local area network (6) and performs a registration of a target mobile device (10), and **in that** as the mobile device (10) a mobile phone and as the localisation signal a signalling or data message transmitted by the mobile phone is used.

4. The method according to claim 3, **characterized in that** the registration of a target mobile device (10) includes the steps of picking up a signalling message from the mobile phone (10) by the localisation service registration device (3), decoding a device identity from a header of the signalling message and linking the device identity to a target person (1).

5. The method according to claim 4, **characterized in that** the registration of the target mobile device (10) further includes a step of determining the power level of the signalling message by the localisation service registration device (3).

6. The method according to claim 5, **characterized in that** the localisation service centre (5) determines the localisation cell (20) in which the mobile device (10) resides from the relative strengths of the localisation signals received by various localisation receivers (40,41,42) and the power level of the signalling message.

7. The method according to claim 3, **characterized in that** a dummy call to the target mobile device (10) is initiated by the localisation service centre (5) and **in that** the mobile device (10) transmits a localisation signal in reply.
